Europäisches Patentamt

European Patent Office

Office européen des brevets

(11) Numéro de publication: **0 194 171**
A1

# DEMANDE DE BREVET EUROPEEN

(21) Numéro de dépôt: **86400201.9**

(22) Date de dépôt: **31.01.86**

(51) Int. Cl.⁴: **C 03 C 11/00**

(30) Priorité: **04.02.85 FR 8501507**

(43) Date de publication de la demande: **10.09.86**
**Bulletin 86/37**

(84) Etats contractants désignés: **AT BE CH DE GB IT LI LU NL SE**

(71) Demandeur: **SOCIETE NATIONALE ELF AQUITAINE**
**Société anonyme dite, Tour Elf 2, Place de la Coupole La Défense 6, F-92400 Courbevoie (FR)**

(72) Inventeur: **Favre, Claude, 22bis, Avenue du Général Leclerc, F-69300 Caluire-et-Cuire (FR)**

(74) Mandataire: **Cavrois, Philippe, Société Nationale Elf Aquitaine Division Propriété Industrielle Tour Elf, F-92078 Paris La Défense - Cedex 45 (FR)**

(54) Procédé de fabrication d'un mineral cellulaire à base de verre et de divers articles à partir de ce matériau.

(57) L'invention concerne un procédé de fabrication d'un minéral cellulaire à base de verre et elle concerne également l'obtention de divers articles à l'aide de ce matériau.

Ce procédé est caractérisé en ce que l'on emploie un mélange constitué de 100 parties en poids de verre broyé et de 0,2 à 2 parties en poids de carbonates de calcium et de magnésium dans un rapport $CO_3Ca/CO_3Mg$ pouvant varier de 20/80 à 80/20, ce mélange étant placé dans des récipients réfractaires ouverts dont les bords ont une hauteur minimum de 15 cm, remplis dudit mélange jusqu'à une hauteur minimum de 6 à 12 cm que l'on place dans un four dont le programme de chauffe est contrôlé de façon appropriée.

Application à la fabrication d'articles à base de verre cellulaire dans lesquels la structure comportant des pores ouverts permet l'accrochage et l'association à des matériaux les plus variés.

0194171

SOCIETE NATIONALE ELF AQUITAINE
DPI 4853
PROCEDE DE FABRICATION D'UN MINERAL CELLULAIRE A BASE DE
VERRE ET DE DIVERS ARTICLES A PARTIR DE CE MATERIAU.

L'invention concerne un procédé de fabrication d'un
minéral cellulaire à base de verre et elle concerne
également l'obtention de divers articles à l'aide de ce
matériau.

On sait d'après les nombreux brevets publiés jusqu'à
maintenant que l'on peut obtenir du verre expansé par
fusion d'un mélange de poudre de verre, de silicates,
sulfates, phosphates, etc... alcalins ou alcalino-terreux,
en présence d'agents gonflants tels que carbone,
carbonates alcalin ou alcalino-terreux, eau, ébonite,
hydrates de carbone, glycérine, etc...

Divers programmes ont été appliqués pour obtenir la fusion
et l'expansion du verre en une seule ou en plusieurs
étapes et en utilisant des matériels et des fours
permettant une fabrication du verre cellulaire en continu
ou en discontinu. Les moyens employés ont permis un bon
contrôle de la "porométrie" c'est-à-dire de la répartition
et de la dimension des pores en majorité fermée ainsi que
de la densité du produit final pouvant, dans les conditions industrielles pratiquées jusqu'à maintenant varier entre 110 et 160 kg par $m^3$ .

Cependant, le besoin n'a pas été ressenti et le moyen n'a pas non plus été trouvé jusqu'à maintenant d'obtenir un verre expansé dans une gamme de densités de 160 à 700 $kg/m^3$ dépassant une épaisseur de 10 à 12 cm et dont on contrôle à volonté la proportion de pores ouverts, matériau présentant un très grand potentiel d'applications les plus variées.

La présente invention a donc pour but d'offrir un procédé qui permette de façon simple et peu coûteuse d'obtenir un verre expansé dont les pores, de répartition contrôlée soient ouverts à concurrence de 30 à 90 % c'est-à-dire que la proportion en volume de pores ouverts soit de 30 à 90 % en volume de pores ouverts sur 100 % en volume de pores et dont la densité soit comprise entre 160 et 700 $kg/m^3$.

L'invention a encore pour but de créer des procédés d'utilisation directe du verre expansé obtenu à la fabrication d'articles les plus divers .

A cet effet, l'invention concerne un procédé de fabrication de verre expansé à partir de verre broyé et d'un mélange de carbonates de calcium et de magnésium caractérisé en ce que l'on emploie un mélange constitué de 100 parties en poids de verre broyé et de 0,2 à 2 parties en poids de carbonates de calcium et de magnésium dans un rapport $CO_3Ca/CO_3Mg$ pouvant varier de 20/80 à 80/20, ce mélange étant placé, par exemple, dans des récipients réfractaires ouverts dont les bords ont une hauteur minimum de 15 cm remplis dudit mélange jusqu'à une hauteur minimum de 6 à 12 cm, choisie en fonction de la masse volumique recherchée, que l'on place dans un four dont on règle le programme de chauffe à une vitesse maximum de 150 à 170°C à l'heure après que la température de 700°C ait été atteinte, on maintient ensuite une température d'environ 800°C pendant au moins 1/2 heure et l'on refroidit à une vitesse maximum de 80°C à l'heure, en respectant cependant une vitesse maximum de 20°C/heure dans la zone de 600 à 500°C.

Dans ces conditions on obtient un verre expansé dont on peut dans une large mesure régler la masse volumique, le rapport du nombre de pores ouverts au nombre des pores fermées ainsi que leurs dimensions respectives en fonction des usages auxquels on le destine.

Sans être tenu par cette explication, on pense que le fait d'utiliser un mélange de calcite et de dolomite et d'appliquer ce programme de température favorise le contrôle de la porométrie dans la mesure où la dolomite, commençant à se décomposer à une température plus basse, crée ensuite autour de la calcite une atmosphère de $CO_2$ qui retarde la décomposition de cette dernière par déplacement de l'équilibre. Le $CO_2$ ayant la calcite pour origine apparaît donc plus tard au cours du déroulement du programme de chauffe à un moment où la viscosité due à la fusion du verre est la plus favorable pour piéger les dégagements gazeux et obtenir les dimensions et la proportion recherchée de pores ouverts et de pores fermés. Il est à noter que ce "retardement" du dégagement du $CO_2$ se situe dans une zone "sensible" où la variation de la viscosité du verre fondu en fonction de la température est assez rapide. Ceci permet de faire varier dans une large mesure les diverses caractéristiques de porométrie du produit final et de laisser pénétrer ultérieurement à la profondeur voulue les autres matériaux que l'on cherche à associer au verre expansé.

Selon une caractéristique de l'invention, on réalise d'abord un prémélange de poudre de verre/carbonates dans un rapport 200/10 à 200/15 et que l'on mélange ensuite de 4 à 30 parties en poids de ce prémélange avec 96 à 70
parties en poids de verre broyé ayant une finesse de 0 à
200 microns, au moins 70 % passant au tamis de
100 microns, le mélange ainsi obtenu étant ensuite traité
comme défini ci-dessus. La variation des proportions de
prémélange dans le mélange initial permet d'obtenir un
verre expansé dont la densité varie de 160 à 700 kg/m³.

L'invention sera mieux comprise à l'aide de la description
qui va suivre d'un ou de plusieurs modes de réalisation de
l'invention.

On prépare un prémélange à partir de 200 kg de poudre de
verre fine, 9 kg de calcite et 3 kg de dolomite en poudre
et l'on repasse ce mélange par exemple dans un mélangeur
ou une bétonnière pour obtenir une poudre homogène et
s'écoulant facilement. A partir de déchets de verre plat
ou de verre à bouteille, on prépare par ailleurs une
poudre de verre ayant des dimensions de particules
comprises entre 0 et 200 microns. Au moins 80 % des
particules doivent passer au tamis de 100 microns.

Dans un premier essai, on mélange 15 kg du premélange
ci-dessus et 85 kg de poudre de verre et l'on charge ce
mélange bien réparti et sans tassement jusqu'à une hauteur
voisine de 66 mm environ dans des bacs en céramique
réfractaire de 600 mm de largeur et de longueur et 250 mm
de hauteur dont le fond est garni de papier kraft destiné
à se carboniser lors de la cuisson ou est pulvérisé d'une
barbotine ou d'un autre agent de démoulage. Pour un
chargement bien réparti sans tassement, le moule contient
ainsi une charge d'environ 75 kg/m². On le place alors
dans un four dont on fait monter en 1 heure la température
à 700°C et pendant les 3/2 heures suivantes, on amène
progressivement la température à 800°, on maintient cette
température pendant 1 heure et l'on coupe ou on baisse le
chauffage. Pour un four bien calorifugé, la chute de température ne dépasse pas 50°C à l'heure. Pratiquement, au bout de 24 heures, on retire du four un produit expansé homogène d'une épaisseur > 27 cm environ et ayant une densité de 250 kg/m³ environ.

Dans un second essai, on mélange 5 kg de prémélange à 108 kg de poudre de verre et l'on charge les mêmes moules jusqu'à une hauteur de 95 mm environ. L'application d'un cycle thermique analogue donne un verre expansé dont la hauteur s'élève à 19 cm et la densité s'élève à 600 kg/m³ environ.

L'épaisseur importante obtenue par le procédé selon l'invention se distingue nettement de l'art antérieur.

Selon les nécessités de la production on peut évidemment procéder en continu par exemple en faisant passer une suite de moules, qui peuvent être notablement plus grands que ci-dessus, les uns derrières les autres en une couche ou plusieurs couches superposées dans un four tunnel dont la programmation donne les mêmes conditions d'échauffement et de refroidissement que dans le four indiqué ci-dessus. Pour économiser l'énergie, le four peut comporter deux étages, l'étage du haut étant réservé à l'avancement dans un sens et l'étage du bas à l'avancement dans l'autre sens. Une système de circulation d'air à une vitesse appropriée permet alors de récupérer la chaleur des produits du bas en cours de refroidissement pour réchauffer la matière de départ.

Au lieu de placer les produits dans des moules circulant sur des rouleaux, on peut ainsi, après interposition d'un système d'étanchéification antiadhésif décrit ci-dessus, placer la poudre directement sur un tapis sans fin réfractaire équipée de bordures, également réfractaires, pour limiter l'expansion latérale du verre.

Dans tous les cas, on peut recommander un préchauffage de la poudre. Il faut cependant veiller à ne pas dépasser trop tôt la température du début de décomposition de la dolomite pour ne pas perdre le bénéfice du dégagement retardé du $CO_2$.

La densité du verre courant est voisine de 2.500 kg/m³. Un verre expansé d'une densité de 250 kg/m³ présente donc une porosité totale de 90 %. La proportion de pores ouverts se détermine de préférence par une mesure d'absorption de gaz que d'absorption de liquide pour éviter un remplissage incomplet dû à la tension superficielle du liquide. Des mesures effectuées sur le verre ci-dessus ont donné un coefficient de remplissage à l'air de 77 %. Le verre est donc considéré comme ayant une porosité ouverte de 77 % et une porosité fermée de 13 %.

Selon une caractéristique de l'invention le verre expansé obtenu en continu (sur tapis ou en moules) ou en discontinu (dans des moules) est encore débité en parallélépipèdes que l'on utilise à diverses applications comme réceptacles de fluides liquides ou gazeux stationnaires ou circulants pour réaliser par exemple des humidificateurs d'ambiance, des masses de rétention de liquide pour des bacs à plantes, des éléments d'échangeurs de chaleur, des éléments filtrants, des supports de culture de plantes, de champignons ou de micro-organismes, etc.. Cette application est facilitée par l'importante proportion de pores ouverts que permet le procédé selon l'invention et elle est rendue intéressante dans de nombreux cas par la résistance du verre aux agents chimiques et aux températures élevées que ne supportent pas les polymères les plus résistants.

Une autre application consiste à utiliser des blocs de verre expansé selon l'invention, convenablement dressés et réassemblés, si nécessaire, pour la préparation de pièces composites, en particulier, comme âmes de panneaux de grande surface ou comme éléments intercalés dans des ensembles multicouches. La bonne rigidité du verre permet d'en faire des cloisons, des planchers intérieurs et des éléments de construction extérieurs tant verticaux qu'horizontaux relativement légers tout en étant de bons isolants thermiques et phoniques.

On peut également façonner ces blocs pour leur donner les formes les plus diverses et s'en servir comme noyaux de pièces composites. Ces noyaux peuvent être définitifs et rester dans les pièces composites ou être provisoires et on les enlève alors par destruction mécanique et évacuation des débris de verre ainsi formés.

Selon une autre caractéristique de l'invention, le matériau obtenu, éventuellement débité, façonné et/ou réassemblé, est encollé et associé à d'autres éléments d'un matériau fini tel que plâtre, bois, pierre naturelle ou artificielle, céramique, verre plein, métal, polymère massif, expansé et/ou stratifié, à des matériaux composites, à des structures complexes intégrant des trames diverses telles que des tubes et ou des résistances électriques ou supportant des miroirs de téléscopes ou de concentrateurs solaires, etc.. Selon les matériaux associés au verre expansé on peut donc obtenir les articles les plus divers se distinguant dans leur légèreté et leur rigidité. En tant que de besoin, certaines des faces non revêtues reçoivent un enduit de finition.

A titre d'exemple, on peut citer : murs isolants et porteurs, plafonds, cloisons, etc...

Une pierre "naturelle" allégée est par exemple obtenue comme suit :

Dans le verre expansé brut, on découpe des blocs à la scie, on les enduit d'une colle qui pénètre les pores jusqu'à une certaine profondeur et on les assemble à une plaque mince de pierre. Après séchage ou durcissement de la colle, l'ensemble présente une tenue mécanique suffisante pour supporter les manipulations courantes et recevoir les opérations de finition (polissage, fermeture des autres surfaces, etc) nécessaires en fonction des emplois visés. Le produit final est un élément fini dont la face vue est une pierre naturelle et dont la masse volumique moyenne représente 35 à 60 % de la masse volumique de la pierre de départ. Cet allègement est particulièrement intéressant pour des plaques de pierre à appliquer en façade car il y a diminution notable des efforts exercés sur les colles et possibilité de se dispenser des agrafes de poses.

Le verre expansé peut encore être débité en plaques, façonné avec des reliefs et associé à divers matériaux devant encore recevoir un traitement de finition ultérieur. On peut ainsi le recouvrir d'un émail minéral, appliqué de façon classique et le cuire au four sans altérer la structure du verre expansé. On peut également le recouvrir d'un produit organique polymérisable dont l'état de polymérisation est plus ou moins avancé et en poursuivre la polymérisation par des méthodes connues en soi. Ces polymères peuvent bien entendu être thermoplastiques ou thermodurcissables selon l'application à laquelle on destine les articles finis.

Une pierre "artificielle" allégée s'obtient à peu près de la même façon :

des blocs de verre expansé sont enduits sur une face d'une couche d'un mortier constitué d'au moins 30 % de résine polyester et de 70 % au plus de charges dures inférieures à 200 microns et sur l'autre face d'une autre couche d'un mortier constitué de la même résine polyester

et de charges dures variées dont les particules ont des
dimensions plus importantes. Le choix de la nature, de la
quantité, des dimensions des particules incluses dans la
première couche de mortier et des conditions de leur
application permettent de donner à la face correspondante
toute sorte d'aspects notamment celui de roches
naturelles, marbres, porphyres, etc. Grâce à la bonne
pénétration du mortier dans le verre expansé on obtient
encore ici un produit d'une excellente tenue mécanique et
selon l'épaisseur relative du verre expansé et des deux
couches de mortier on parvient à un allègement du produit
final qui présente le même intérêt que celui évoqué
ci-dessus.

On peut décrire à titre d'exemple les carreaux émaillés
suivants : dans du verre expansé d'une masse volumique de
250 kg/m³ on découpe à la scie des blocs ayant
sensiblement la longueur et la largeur des carreaux à
fabriquer et une épaisseur de 25 mm environ. Après un
éventuel traitement de surface tel que sablage, estampage,
meulage qui leur donne les reliefs recherchés on leur
applique un émaillage léger (0,5 kg/m²) et on cuit au four
de façon classique. On obtient des carreaux ou plaques
qui, en grandes dimensions (600 x 600 mm) sont encore
utilisables comme éléments de plafonds appréciables par
leur effet décoratif et/ou leurs propriétés d'isolant
phoniques. Un émaillage un peu plus chargé (1,8 kg/m²
environ) sur un verre expansé de 350 kg/m³ au moins permet
d'obtenir une gamme étendue de carreaux de revêtement
mural ou autres.

Une application intéressante consiste encore à associer le
verre expansé, en surface ou en profondeur, à des matières
actives telles que des polymères conducteurs ou des
électrolytes solides pour former des piles et des
accumulateurs, à des masses catalytiques utilisables dans les réacteurs chimiques, les pots d'échappement antipollution, etc...

Le verre expansé comportant des pores ouverts selon l'invention peut subir des modifications de sa structure interne par des procédés chimiques ou physiques et il peut également être rempli après sa fabrication de divers produits organiques ou minéraux tels que des polymères expansibles ou non, mortiers de résine, bitumes, colles, ciments, etc. Ce remplissage peut intéresser tout ou partie de l'épaisseur des blocs de verre expansé que l'on traite. Considérant chaque pore, il est également possible que son remplissage soit total ou partiel. Naturellement l'épaisseur à laquelle un bloc est rempli et le coefficient de remplissage de chaque pore peuvent varier en fonction des modes opératoires, pression, température, temps de traitement, etc. et des caractéristiques des agents de remplissage. On crée ainsi par transformation primaire des caractéristiques du verre expansé de nouvelles gammes de matériaux qui peuvent être utilisés directement ou recevoir tout ou partie des associations précédemment décrites. A titre d'exemple non limitatif, on citera la confection de flotteurs utilisables à grande profondeur ou en surface par trempage de blocs de verre dans du bitume, du bitume polymère et/ou des polymères appropriés. Le non-remplissage des pores fermés permet ici d'obtenir des matériaux flottants.

Bien entendu, la présente invention n'est pas limitée aux exemples ci-dessus décrits mais elle embrasse au contraire toutes les variantes accessibles à l'homme de l'art.

1

REVENDICATIONS

1 - Procédé de fabrication de verre expansé à partir de verre broyé et d'un mélange de carbonates de calcium et de magnésium dans lequel on emploie un mélange constitué de 100 parties en poids de verre broyé et de 0,2 à 2 parties en poids de carbonate de calcium et de carbonate de magnésium, caractérisé en ce que le rapport $CO_3Ca/CO_3Mg$ peut varier de 20/80 à 80/20, ce mélange étant placé dans des récipients réfractaires ouverts dont les bords ont une hauteur minimum de 15 cm remplis du dit mélange jusqu'à une hauteur minimum de 6 à 12 cm que l'on place dans un four dont on règle le programme de chauffage à une vitesse maximum de 150 à 170°C à l'heure après que la température de 700°C ait été atteinte, on maintient ensuite une température d'environ 800°C pendant au moins 1/2 heure et l'on refroidit à une vitesse maximum de 80°C à l'heure, en respectant cependant une vitesse maximum de 150 à 170°C à l'heure dans la zone de 600 à 500°C.

2 - Procédé selon la revendication 1, caractérisé en ce que l'on réalise d'abord un prémélange poudre de verre/carbonates dans un rapport 200/10 à 200/15 et que l'on mélange ensuite de 4 à 30 parties en poids de ce prémélange avec 96 à 70 parties en poids de verre broyé ayant une finesse de 0 à 200 microns, au moins 70 % passant au tamis de 100 microns, le mélange ainsi obtenu étant ensuite traité comme défini ci-dessus.

3 - Application du verre expansé obtenu par le procédé selon l'une quelconque des revendications 1 et 2, caractérisée en ce que ce verre est débité en parallélépipèdes que l'on utilise comme réceptacles de fluides liquides ou gazeux stationnaires ou circulants pour réaliser par exemple des humidificateurs d'ambiance, des masses de rétention
de liquide pour des bacs à plantes, des éléments
d'échangeurs de chaleur, des éléments filtrants, des
supports de culture de plantes, de champignons ou de
micro organismes, etc..

4 - Application du verre expansé obtenu par le procédé
selon l'une quelconque des revendications 1 et 2,
caractérisée en ce que ce verre est débité et usiné
en formes plus ou moins élaborées que l'on utilise
pour la préparation de pièces composites, par exemple
comme âmes de panneaux composites ou élément
d'ensembles multicouches, ou comme noyaux de pièces
composites définitifs ou provisoires, supports
d'éléments chauffants, etc.

5 - Application du verre expansé obtenu par le procédé
selon l'une quelconque des revendications 1 et 2,
caractérisé en ce que ce verre, éventuellement
débité, façonné et/ou réassemblé, est encollé et
associé à d'autres éléments d'un matériau fini tel
que plâtre, bois, pierre naturelle ou artificielle,
céramique, verre plein, métal, polymère massif,
expansé et/ou stratifié, à des matériaux composites,
à des structures complexes intégrant des trames
diverses telles que des tubes et/ou des résistances
électriques ou supportant des miroirs de télescopes
ou de concentrateurs solaires, etc...

6 - Application du verre expansé obtenu par le procédé
selon l'une quelconque des revendications 1 et 2
caractérisé en ce que ce verre, éventuellement débité
et façonné, est associé à un matériau non fini devant
encore subir divers traitements physiques ou
chimiques tels que cuisson, polymérisation, etc...

7 - Application du verre expansé obtenu par le procédé selon l'une quelconque des revendications 1 et 2 caractérisé en ce que ce verre, éventuellement débité et façonné est utilisé comme support pénétré en surface ou en profondeur d'une matière active organique ou minérale telle que polymère conducteur, masse catalytique, etc.

8 - Application du verre expansé obtenu par le procédé selon l'une quelconque des revendications 1 et 2, caractérisé en ce que ce verre, éventuellement débité et/ou façonné peut subir des modifications de structure interne par des procédés physiques ou chimiques et/ou il est rempli à une faible profondeur ou à coeur de produits divers organiques ou minéraux tels que polymères expansibles ou non, mortiers de résine, bitumes, colles, ciments, etc., le remplissage des pores individuels pouvant lui-même être partiel ou total en fonction du temps de remplissage et des caractéristiques physiques de l'agent de remplissage.

Office européen
des brevets

**RAPPORT DE RECHERCHE EUROPEENNE**

0194171
Numéro de la demande

EP  86 40 0201

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| | | | C 03 C 11/00 |
| X | US-A-3 963 503 (J.D. MACKENZIE) * Exemple 1; revendications 1,2 * | 1-8 | |
| | --- | | |
| X | FR-A-1 559 191 (DEUTSCHE AKADEMIE DER WISSENSCHAFTEN) * Page 2, colonne de droite, paragraphe 3; exemple 1; résumé * | 1-8 | |
| | --- | | |
| X | DE-A-1 596 869 (KLÖCKNER-HUMBOLDT-DEUTZ) * Page 2, paragraphe 2 * | 1 | |
| | --- | | |
| X | DE-A-3 314 797 (MAYER-REILAND) * Revendications 3,4; page 5, ligne 16 - page 7, ligne 21 * | 1-8 | |
| | ----- | | |
| | | | **DOMAINES TECHNIOUES RECHERCHES (Int. Cl.4)** |
| | | | C 03 C 11/00 |

Le présent rapport de recherche a été établi pour toutes les revendications

| Lieu de la recherche | Date d'achèvement de la recherche | Examinateur |
|---|---|---|
| LA HAYE | 14-05-1986 | BOUTRUCHE J.P.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82